# EUROPEAN PATENT APPLICATION

(11) **EP 1 630 133 A1**
(43) Date of publication of application: **01.03.2006**
(21) Application number: 04405535.8
(22) Date of filing: 27.08.2004
(51) Int. Cl.: C01B 21/20, C01B 13/11

(54) **Method and arrangement for producing nitrogen oxides**

(71) Applicant: Innovative Ozone Services Inc., 3014 Bern (CH)
(72) Inventor: Jenny, Rudolf, 3112 Allmendingen (CH)
(74) Representative: AMMANN PATENTANWÄLTE AG BERN

(57) **Abstract**

Nitrogen oxides, more particularly dinitrogen pentoxide, is produced by subjecting a feed gas comprising nitrogen and oxygen to a dielectric barrier discharge. The created nitrogen oxide is separated from the gas stream by desublimation or condensation at decreased temperatures. In preferred execution manners of this process, inter alia, the energy per gas mass unit is held near the poisoning limit, the nitrogen/oxygen mass proportion is controlled, the feed gas is dried to avoid creation of nitric acids, the feed gas is kept substantially free from hydrocarbons, and/or the reaction gas after separation of the nitrogen oxid is recirculated to the generator. A suitable production arrangement comprises a feed gas supply unit (3), a ozone generator (5) fed by the feed gas supply unit (3), and a nitrogen gas separator (7) supplied with the output gas mixture of the ozone generator.

## Description

The present invention relates to a method for producing nitrogen oxides, in particular dinitrogen pentoxide, and an arrangement for performing the method.

Dinitrogen Pentoxide (N₂O₅) is needed inter alia for producing nitric acid (HNO₃) and as an agent for nitration reactions under acid and water-free conditions. However, the production of nitrogen oxides particularly N₂O₅ is rather burdensome. One reason therefor is that N₂O₅ is highly hygroscopical and instantly produces nitric acid in the present of even only traces of water.

EP-A-0 983 965 describes a method for producing N₂O₅ by oxidizing the more readily available NO₂ by ozone (O₃). Obviously, this method has the disadvantage that the nitrogen dioxide has to be produced by one of the known methods.

Hence, it is one object of the present invention to propose a more convenient method for producing nitrogen oxides, particularly dinitrogen pentoxide.

Such a method is defined in claim 1. The further claims define preferred execution manners of the method and arrangements for executing the method.

Basically, it is proposed to produce the nitrogen oxides with nitrogen gas as the starting material and oxygen as the oxidans in an adapted ozone generator which uses a dielectric barrier discharge, also known as silent electric discharge, for producing ozone.

Nitrogen oxides are well-known, yet undesired by-products of ozone generation in a gas stream by silent electric discharge. In the microdischarges occurring therein, not only oxygen is cleaved, but also nitrogen is activated and reacts in forming nitrogen oxides up to N₂O₅ and nitrogen trioxide (NO₃). However, the concentration of nitrogen oxides remains in the domain of some hundreds ppm at most, or a few vol-% of the produced ozone.

Now, surprisingly, it has been found that the nitrogen oxide concentration, specifically the concentration of N₂O₅, in the output of an ozone generator can be increased up to about 10 % of the produced ozone.

In this context, and throughout the description, the term "ozone generator" shall be understood as a device, wherein a gas stream may be submitted to a silent electric discharge as it is the case in known ozone generators. By a nitrogen oxide generation system, a system including a modified ozone generator, a separation device for nitrogen oxide and a feed-gas recirculation loop is understood. The ozone generator is however laid out and/or operated in order to optimise the yield of nitrogen oxides, particularly N₂O₅. The processes taking place in ozone generators and the reaction mechanisms involved in ozone generation are e.g. examined in V. Kogelschatz, B. Eliasson, and M. Hirth, Ozone Generation from Oxygen and Air: Discharge Physics and Reaction Mechanisms, Ozone: Science & Engineering 10/4 (1988) 367-77. Silent electric discharge is also known as dielectric barrier discharge.

Percentages are given by weight if not specified otherwise.

The principle of plasma physics is that nitrogen in the presence of oxygen when subjected to a dielectric barrier discharge, will under specific conditions produce N₂O₅ by the following route:

N₂ + O₂ + Energy → NO → NO₂ → NO₃ → N₂O₅

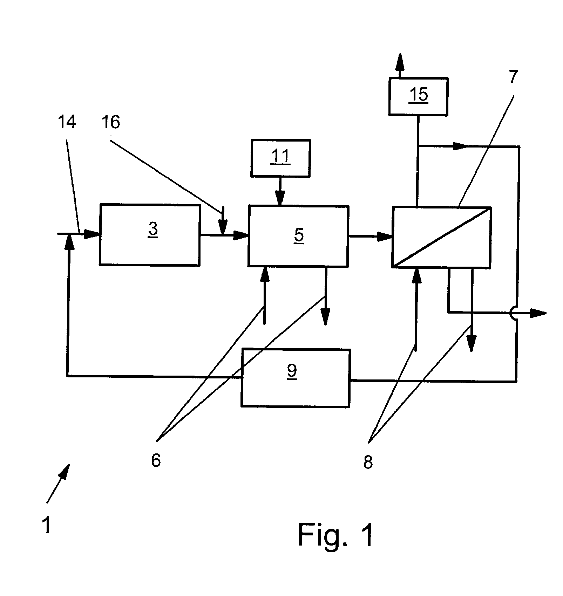

The invention will be illustrated by way of a preferred embodiment. The only Figure 1 shows a block diagram of a nitrogen oxide generation system.

The generator arrangement 1 for producing N₂O₅ basically comprises the following main items (refer to Figure 1):
- a feed gas preparation and supply unit 3 to the generator 5
- an ozone generator 5
- an N₂O₅ separator 7
- an optional feed gas recycling system 9 connected to the ozone generator 5

The feed gas for the ozone generator 5 is a gas containing at least oxygen (O₂) and nitrogen (N₂). The ratio of N₂ to O₂ will be controlled for the optimised production of N₂O₅ in the feed gas system 3.

A low dewpoint (temperature, at which a gas would saturate with water vapour when cooled without changing pressure and vapour content) of the feed gas is essential as the presence of water will lead to the formation of HNO₃ as a subsequent reaction of N₂O₅ with water.

The feed gas must be as free as possible of hydrocarbons as these will react in the ozone generator to CO₂ and H₂O and thereby form with N₂O₅ again HNO₃.

The feed gas, as it flows through the ozone generator 5, will be subjected to a high voltage a.c. discharge. The operating parameters of the ozone generator must be adapted to optimize the efficiency of the formation of nitrogen oxides.

The production efficiency of N₂O₅ in the ozone generator 5 is significantly affected by the temperature of the gas and the power density in the discharge gap through which the feed gas flows. The ozone generator 5 will therefore be temperature controlled and operated within a range of +3 °C to 100 °C by means of a temperature controller (not shown) and temperature control liquid circulation conduits 6. The conditions in the gap will be set close to the discharge poisoning limit.

The power density (W/m²) of the ozone generator is regulated by a power supply system 11. The frequency of the power supply has been found not to play a significant role in the production efficiency of N₂O₅.

The N₂O₅ separator 7 will separate the N₂O₅ from the gas leaving the ozone generator by cooling/refrigerating the gas and collect the N₂O₅ as a solid. It is connected to another temperature control unit (not shown) by cooling liquid circulation conduits 8.

The N₂O₅-free gas can be returned to the inlet of the ozone generator for optimizing the system by means of a feed gas recycling system 9, comprising amongst other equipment a compressor/fan. Recycling the gas reduces the amount of fresh feed gas 14 that needs to be pre-treated.

If the exhaust gas is not recycled then it must be treated by a thermal, catalytic or wet scrubber 15 to meet the environmentally acceptable limits of ozone before it can be discharged into the atmosphere.

If a scrubber, operating with high purity water as the scrubbing liquid, is installed instead of an N₂O₅ separator then nitric acid of extremely high purity will be obtained.

The benefits of this process over other methods are:
- The raw materials used for N₂O₅ production are gases which may be taken from the air; bulk chemicals do not need to be stored on site.
- There is no need to use nitrogen in the form of nitrogen oxide at a lower oxidation level (e.g. NO₂) - elementary nitrogen is sufficient, however the optional addition of NO₂ 16 to the feed gas of the ozone generator will enhance the production efficiency.
- The gas exiting from the process can be recycled to the inlet of the ozone generator for reuse after separation of the N₂O₅, possibly together with small amounts of nitrogen oxides of a lower oxidation state (e.g. NO, NO₂).
- The generation of N₂O₅ takes place completely within the ozone generator 5 and no subsequent or additional reactors/gas mixers are required.
- The process with the optional gas recycling does not produce any by-products that have to be discharged to the environment.
- The process does not produce liquid effluents and therefore no prior effluent treatment is required.

Preferred process parameters of this method of producing N₂O₅ are:
Feed Gas: composition (N₂:O₂):
   80:20 upto 25:75,
   preferred at most 30:70,
   the theoretical optimum being 26:74;
   dewpoint: -60 °C (at 1 Bar) or lower temperature, i.e.at most 10 ppm H₂O;
   pressure: at least 2 Bar, e.g. 6 Bar concentration of hydrocarbons, particularly
   methane (CH₄): max. 15 ppm.
Temperature in the discharge gap of the ozone generator:
   3 °C to 100 °C
Energy density of the electric barrier discharge: 2-6 kW/m²

N₂O₅ yield: up to 10 % of the ozone concentration.

From the foregoing non-limiting description of exemplary embodiments, the one skilled in the art may derive numerous alterations and adaptions without leaving the scope of the invention which is defined by the claims. For example, the following modifications may be conceived:
- As mentioned, the exhaust gas may be discharged into the environment after appropriate after-treatment for removing prohibited components (ozone, nitrogen oxides), or it may be recycled with appropriate conditioning, before all pressurizing and heating, or a combination thereof.
- For increasing the N₂O₅ yield or the power efficiency of the ozone generator, NO₂ may be admixed to the feed gas.

## Claims

1. Method for producing nitrogen oxides, particularly dinitrogen pentoxide (N₂O₅), wherein
- a feed gas comprising nitrogen and oxygen is subjected to a dielectric barrier discharge in a ozone generator (5) in order to generate a gas mixture comprising ozone and at least one nitrogen oxide at the outlet of the ozone generator, and
- the gas mixture is cooled down to a temperature where the nitrogen oxide is separated from the gas mixture by condensation or desublimation and/or the gas mixture is subjected to a wet washing process using a washing liquid absorbing the nitrogen oxide for separating the nitrogen oxide from the gas mixture.

2. The method of claim 1, wherein the nitrogen oxide is dinitrogen pentoxide.

3. The method of one of claims 1 to 2, wherein the gas temperature in the dielectric barrier discharge space is held in a range from about 3 °C up to about 100 °C.

4. The method of one of claims 1 to 3, wherein the gas mixture is cooled to a temperature at which the nitrogen oxide has a vapour pressure of at most 10 mBar (1000 Pa).

5. The method of one of claims 1 to 4, wherein the gas mixture is cooled to -20 °C or a lower temperature.

6. The method of one of claims 1 to 5, wherein the produced nitrogen oxide is substantially N₂O₅ and the washing liquid is water in order to obtain nitric acid (HNO₃) by reaction of water and N₂O₅.

7. The method of one of claims 1 to 6, wherein the mass proportion of nitrogen to oxygen (N₂:O₂) in the feed gas is in the range from 80:20 up to 25:75.

8. The method of one of claims 1 to 7, wherein the concentration of hydrocarbons, particularly methane, in the feed gas is at most 15 ppm.

9. The method of one of claims 1 to 8, wherein the energy relative to the gas mass in the dielectric barrier discharge is adjusted to at least 95 % of the poisoning limit.

10. The method of one of claims 1 to 9, wherein the concentration of nitrogen oxide in the gas mixture is at least 1 wt.-%, preferably at least 5 wt.-% of the ozone fraction of the gas mixture.

11. The method of one of claims 1 to 10, wherein the concentration of the nitrogen oxide in the gas mixture relative to the fraction of the feed gas obeying the composition of the nitrogen oxide, is at least 1 wt.-%.

12. The method of one of claims 1 to 11, wherein the gas mixture after the separation of the nitrogen oxide is recirculated into the feed gas.

13. The method of one of claims 1 to 12, wherein the recirculated gas is compressed and optionally heated to adapt its state to that of the feed gas at the point where the recirculated gas is injected into the feed gas stream.

14. The method of one of claims 1 to 13, wherein an effective stream of nitrogen dioxide is added to the feed gas before entry into the nitrogen oxide generator.

15. An arrangement (1) for producing a nitrogen oxide according to the method of one of claims claims 1 to 14 comprising
- a feed gas source (3) for furnishing the feed gas;
- a ozone generator (5) capable to produce a dielectric barrier discharge in the path of the feed gas stream, an inlet of the generator being connected to the feed gas source and an outlet for providing a gas mixture stream containing nitrogen oxides; and
- a separating device (7) connected to the output of the ozone generator for substantially separating a nitrogen oxide from the gas mixture.

16. The arrangement (1) of claim 15, wherein the separator device (7) is provided with temperatur control means (8) for keeping the gas mixture in the separator at a temperature where the nitrogen oxide is is substantially completely separated from the gas mixture by condensation or desublimation.

17. The arrangement (1) of one of claims 15 to 16, wherein the recirculation arrangement (9) with an inlet and an outlet, the inlet being connected to the gas mixture conduit after the nitrogen oxide separator device, and the inlet being connected to the feed gas supply conduit before the nitrogen gas generator inlet in order to recirculate the reusable fraction of the gas mixture.
